# EUROPÄISCHE PATENTSCHRIFT

(11) **EP 2 535 570 B1**
(45) Veröffentlichungstag und Bekanntmachung des Hinweises auf die Patenterteilung: **08.06.2016**
(21) Anmeldenummer: 12172274.8
(22) Anmeldetag: 15.06.2012
(51) Int. Cl.: F03D 7/02, F03D 80/00

(54) **Windnachführungsanordnung einer Windenergieanlage.**
Yaw control for wind turbine.
Système d'orientation d'une éolienne.

(30) Priorität: 16.06.2011 DE 102011077613
(43) Veröffentlichungstag der Anmeldung: 19.12.2012
(73) Patentinhaber: Availon GmbH, 48429 Rheine (DE)
(72) Erfinder: Feddersen, Lorenz-Theo, 48429 Rheine (DE)
(74) Vertreter: Eisenführ Speiser

(56) Entgegenhaltungen:
- WO-A1-2012/000504
- US-A1- 2010 138 060

## Beschreibung

Die Erfindung betrifft eine Windnachführungsanordnung zur Nachführung eines Rotors einer Windenergieanlage in Abhängigkeit von einer Windrichtung, umfassend zwei oder mehrere Stellantriebe mit jeweils einem Stellmotor und einem Stellgetriebe, sowie eine Steuerungsvorrichtung zur Ansteuerung der Stellantriebe.

Die Erfindung betrifft ferner eine Überwachungsvorrichtung für eine Windnachführungsanordnung.

Die Erfindung betrifft ferner ein Verfahren zur Nachführung eines Rotors einer Windenergieanlage in Abhängigkeit von einer Windrichtung, umfassend den Schritt: Ansteuern von zwei oder mehreren Stellantrieben mit jeweils einem Stellmotor und einem Stellgetriebe mittels einer Steuerungsvorrichtung, vorzugsweise einer Steuerungsvorrichtung zur Ansteuerung von Stellantrieben einer Windnachführungsanordnung.

Windnachführungsanordnungen und Verfahren der eingangs genannten Art werden eingesetzt zur Windrichtungsnachführung bei Windenergieanlagen. Die Windrichtungsnachführung erfolgt durch zwei oder mehrere Stellantriebe, die auch Azimutantriebe genannt werden. Diese Stellantriebe bewirken eine Verdrehung der Gondel mit dem Rotor einer Windenergieanlage um eine im Wesentlichen vertikale Hochachse einer Windenergieanlage, das heißt eine im Wesentlichen horizontale Drehung des Rotors, um den Rotor entsprechend der vorherrschenden Windrichtung einzustellen.

Die Windrichtung wird in einer Windenergieanlage üblicherweise über Sensoren, so genannte Windrichtungsgeber, ermittelt. Die Steuerung der Windrichtungsnachführung erfolgt über eine Steuerungsvorrichtung, auch Controller genannt, welche die Stellantriebe ansteuert.

Eine Windnachführungsanordnung wird auch als Windnachführungssystem oder Azimutsystem bezeichnet und umfasst üblicherweise zwei oder mehrere Stellantriebe mit jeweils einem Stellmotor und einem Stellgetriebe, sowie eine Steuerungsvorrichtung oder Controller zur Ansteuerung der Stellantriebe. Als Stellmotoren kommen vorzugsweise Drehstrommotoren zum Einsatz. Die Anzahl der Stellantriebe ist vom Anlagentyp abhängig und liegt vorzugsweise zwischen vier und sechs Stellantrieben. Es können jedoch auch zwei, drei oder mehr als sechs Stellantriebe vorhanden sein.

Bei der Windrichtungsnachführung wird die um eine im Wesentlichen vertikale Hochachse der Windenergieanlage drehbar gegenüber dem Turm der Windenergieanlage gelagerte Gondel mit dem Rotor um die Hochachse und in Relation zum Turm in horizontaler Richtung gedreht.

Bei existierenden Windnachführungsanördnungen kommt es immer wieder zu Schäden an den Stellantrieben und zu einem vollständigen Ausfall der Windnachführungsanordnung. Dies ist zum einen mit dem finanziellen Schaden des Verlusts der Windnachführungsanordnung bzw. dem entsprechenden Aufwand für eine Reparatur verbunden und führt zum anderen zu Ausfällen der Windenergieanlage, da eine Windrichtungsriachführung beim Ausfall der Windnachführungsanordnung nicht möglich ist, und zusätzlich zu weiteren Stillstandszeiten der Windenergieanlage, die für eine Reparatur oder einen Austausch der Windnachführüngsanordnung oder Teilen davon erforderlich sind. Das Dokument US-A-2010/138 060 offenbart eine Nachführungsanordnung gemäß dem Oberbergriff des Anspruch 1. Der Erfindung liegt daher die Aufgabe zugrunde, einen oder mehrere der genannten Nachteile zu vermindern oder zu beseitigen.

Diese Aufgabe wird gelöst durch eine Windnachführungsanordnung zur Nachführung eines Rotors einer Windenergieanlage in Abhängigkeit von einer Windrichtung, umfassend zwei oder mehrere Stellantriebe mit jeweils einem Stellmotor und einem Stellgetriebe, sowie eine Steuerungsvorrichtung zur Ansteuerung der Stellantriebe, ferner umfassend eine Überwachungsvorrichtung, die ausgebildet und angeordnet ist, für jeden der zwei oder mehreren Stellmotoren einen Motorstrom zu erfassen, wobei die Überwachungseinrichtung ausgebildet und angeordnet ist, die erfassten Motorströme miteinander zu vergleichen und ein Warnsignal zu generieren, wenn eine Differenz der Motorströme einen vorbestimmten wert überschreitet.

Der Erfindung liegt die Erkenntnis zugrunde, dass Schäden und Ausfälle an Windnachführungsanordnungen insbesondere dann zu einem Komplettausfall führen, wenn zunächst lediglich ein Stellantrieb oder einzelne Stellantriebe ausfallen, insbesondere durch beispielsweise einen Bruch an der Getriebewelle eines Stellgetriebes, und wenn durch den Ausfall dieses einzelnen oder einzelner Stellantriebe die übrigen Stellantriebe zusätzlich die Last des bzw. der ausgefallenen Stellantriebe übernehmen müssen. Diese durch den Ausfall erfolgenden Überlastung der übrigen Stellantriebe führt vermehrt dazu, dass auch die übrigen Stellantriebe gleichzeitig oder nacheinander ausfallen oder beschädigt werden, insbesondere ebenfalls durch Brüche an der Getriebewelle der Stellgetriebe aufgrund der zusätzlichen Belastung. Mit jedem ausgefallenen Stellantrieb erhöht sich die Belastung der noch verbleibenden Stellantriebe und damit die Wahrscheinlichkeit einer Beschädigung bzw. eines Ausfalls dieser verbleibenden Stellantriebe.

Ein besonderes Problem bei dieser Art des Schadensverlaufs und insbesondere bei Brüchen an den Getriebewellen der Stellgetriebe ist es, dass der Ausfall einzelner Stellantriebe bei einer üblichen Wartung oder Inspektion einer Windenergieanlage nicht erkannt wird, da selbst bei einem Bruch der Getriebewelle eines Stellgetriebes sowohl der Stellmotor im Leerlauf weiterdreht als auch die Zahnräder des Stellgetriebes beim Verfahren bzw. Verdrehen der Gondel durch die übrigen Stellantriebe mitdrehen. Bei einem beschädigten Stellantrieb mit Bruch an der Getriebewelle erfolgt trotz Motordrehung und Zahnradeingriff des Stellgetriebes jedoch keine Kraftübertragung vom Motor auf die Getriebezahnräder. Dies ist jedoch bei einer üblichen Wartung oder Inspektion, insbesondere wenn keine Strommessung erfolgt, nicht zu erkennen. Schäden an einzelnen Stellantrieben bleiben daher häufig unerkannt, führen zu der oben dargestellten Überlastung der übrigen Stellantriebe und somit schließlich zum Komplettausfall der Windnachführungsanordnung mit den eingangs genannten Nachteilen.

Aufbauend auf diesen Erkenntnissen besteht die erfindungsgemäße Lösung darin, eine Überwachungsvorrichtung vorzusehen, die eine Funktionskontrolle der Stellantriebe ermöglicht und den Ausfall eines oder mehrerer Stellantriebe frühzeitig anzeigen kann. Dazu weist die erfindungsgemäße Windnachführungsanordnung eine Überwachungsvorrichtung auf, mit der die Motorströme der einzelnen Stellmotoren erfasst werden können. Dies basiert wiederum auf der Erkenntnis, dass die Motorströme bzw. ihre Veränderung eine Aussage über eine Beschädigung, insbesondere beispielsweise einen Bruch an der Getriebewelle eines Stellantriebs, zulassen. Beim Bruch einer Getriebewelle läuft der Motor zwar noch, jedoch noch nur mit dem Leerlaufstrom und nicht mit dem Nennstrom.

Durch die Erfassung der Motorströme durch eine Überwachungsvorrichtung wird somit die Möglichkeit geschaffen, beispielsweise durch eine anschließende Auswertung der Motorströme, Beschädigungen oder Ausfälle einzelner der Stellantriebe zu erkennen, bevor die gesamte Windnachführungsanordnung ausfällt oder beschädigt ist. Eine Auswertung der Motorströme erfolgt durch Vergleich der Motorströme untereinander vorzugsweise mit einem oder verschiedenen vorbestimmten Werten und/oder über einen bestimmten Zeitraum.

Auf diese Weise kann der beschädigte bzw. ausgefallene Stellantrieb repariert oder ausgetauscht werden, bevor es durch den Ausfall oder die Beschädigung zu einer Überlastung der übrigen Stellantriebe und damit zu weiteren Ausfällen bzw. Beschädigungen kommt. Der Austausch bzw. die Reparatur eines einzelnen Stellantriebs, beispielsweise durch Austausch einer gebrochenen Getriebewelle oder des ganzen Stellgetriebes, ist deutlich kostengünstiger und mit erheblich geringeren Ausfallzeiten der Windenergieanlage verbunden als der Austausch bzw. der Reparatur einer gesamten Windnachführungsanordnung.

Bei der Erfindung werden die Motorströmen zweier oder mehrerer Stellantriebe miteinander und/oder mit einem vorbestimmten Wert und/oder über einen bestimmten Zeitraum verglichen. Der Vergleich der Motorströme untereinander ist insbesondere bevorzugt, wenn die Stellmotoren der Stellantriebe gleich ausgebildet sind, da dann aus einem Unterschied der Motorströme leicht auf einen Schaden bzw. das Versagen eines Stellantriebs geschlossen werden kann. Mit einer entsprechenden Kalibrierung ist dies jedoch auch für Stellantriebe unterschiedlichen Typs oder unterschiedlicher Leistung möglich. Entsprechend kann auch jeder der Motorströme mit einem gemeinsamen oder einem jeweils dem Stellantrieb zugeordneten vorbestimmten Wert verglichen werden, so dass auch unabhängig von den anderen Motorströmen der anderen Stellantriebe für einen einzelnen Stellantrieb durch Abweichung vom vorbestimmten Wert auf einen Schaden bzw. einen Ausfall des Stellantriebs geschlossen werden kann. Alternativ oder zusätzlich können die jeweiligen Motorströme über einen bestimmten Zeitraum erfasst und auf Veränderungen In diesem Zeitraum ausgewertet werden, da beispielsweise ein plötzlicher Abfall eines Motorstromwerts auf einen Schaden am jeweiligen Stellantrieb hinweisen kann.

In einer weiteren bevorzugten Ausführungsform ist die Windnachführungsanordnung dadurch gekennzeichnet, dass die Überwachungsvorrichtung ausgebildet und angeordnet ist, auf Basis eines Ergebnisses eines Vergleichs der Motorströme ein Warnsignal zu generieren.

In dieser Ausführungsform wird das Ergebnis des Vergleichs der Motorströme miteinander, über einen bestimmten Zeitraum und/oder mit einem bzw. mehreren, gegebenenfalls unterschiedlichen vorbestimmten Werten herangezogen, um ein Warnsignal zu generieren, insbesondere dann, wenn das Vergleichsergebnis ein bestimmtes Ergebnis erreicht. Ein Warnsignal wird vorzugsweise insbesondere dann generiert, wenn die Motorströme untereinander voneinander abweichen, insbesondere um einen vorbestimmten Betrag oder Prozentsatz, oder von dem bzw. den vorbestimmten Werten um einen Betrag oder einen Prozentsatz abweichen oder sich in einem bestimmten Zeitraum um vorzugsweise seinen vorbestimmten Betrag oder mehr verändert haben..

Die Erzeugung eines Warnsignals hat den Vorteil, dass das Vorliegen einer Abweichung angezeigt wird, so dass entsprechende Maßnahmen zur Vermeidung von Nachteilen oder weiteren Schäden vorgenommen werden können. Das Warnsignal kann ein optisches, akustisches und/oder elektrisches Signal sein. Insbesondere beispielsweise ein elektrisches Signal kann an andere Vorrichtungen zur Weiterverarbeitung, Anzeige und/oder Einleitung von Maßnahmen weitergegeben werden.

Dabei ist es insbesondere bevorzugt, dass die Überwachungsvorrichtung ausgebildet und angeordnet ist, ein Signal an die Steuerungsvorrichtung abzugeben, vorzugsweise das zuvor beschriebene Warnsignal.

Die Weitergabe des Signals, insbesondere des Warnsignals, an die Steuerungsvorrichtung hat den Vorteil, dass die Steuerungsvorrichtung üblicherweise mit einer Anzeigeeinrichtung oder weiteren Recheneinheiten in der Windenergieanlage öder an anderen Standorten direkt oder indirekt verbunden ist und so ein von der Überwachungsvorrichtung erzeugtes Signal oder Warnsignal in der Steuerungsvorrichtung weiterverarbeitet, dort ausgegeben und/oder an andere Einrichtungen weitergegeben werden kann.

Eine weitere bevorzugte Ausführungsform der Windnachführungsanordnung ist dadurch gekennzeichnet, dass die Überwachungsvorrichtung ausgebildet und angeordnet ist, ein Signal an eine Rechnereinheit einer Windenergieanlage abzugeben, vorzugsweise das zuvor beschriebene Warnsignal.

Die Weitergabe des Signals, insbesondere des Warnsignals, an eine Rechnereinheit einer Windenergieanlage hat den Vorteil, dass eine solche Rechnereinheit üblicherweise mit einer Anzeigeeinrichtung oder weiteren Recheneinheiten in der Windenergieanlage oder an anderen Standorten direkt oder indirekt verbunden ist und so ein von der Überwachungsvorrichtung erzeugtes Signal oder Warnsignal in der Rechnereinheit weiterverarbeitet, dort ausgegeben und/oder an andere Einrichtungen weitergegeben werden kann.

Die Windnachführungsanordnung gemäß der Erfindung ist dadurch gekennzeichnet, dass die Überwachungsvorrichtung ausgebildet und angeordnet ist, die erfassten Motorströme miteinander zu vergleichen und ein Warnsignal zu generieren, wenn eine Differenz der Motorströme einen vorbestimmten Wert überschreitet.

Insbesondere ist bevorzugt, dass die Überwachungsvorrichtung ausgebildet und angeordnet ist, die erfassten Mötorströme miteinander zu vergleichen und ein Warnsignal zu generieren, wenn eine Differenz der Motorströme im Wesentlichen einer Differenz zwischen einem Nennstrom und einem Leerlaufstrom der Stellmotoren entspricht.

Beispielsweise beim Bruch an der Getriebewelle eines Stellgetriebes läuft zwar der Motor weiter und auch die Zahnräder des Stellgetriebes, jedoch im Leerlauf. Mit der genannten Ausführungsform kann somit auf einen Schaden eines Stellantriebs geschlossen werden, wenn der Vergleich der Motorströme miteinander ergibt, dass einzelne Stellantriebe oder ein einzelner Stellantrieb nicht mit dem Nennstrom, sondern mit dem Leerlaufstrom läuft bzw. laufen.

Die Überwachungsvorrichtung kann auch ausgebildet und angeordnet sein, die erfassten Motorströme mit dem Nennstrom zu vergleichen und ein Warnsignal zu generieren, wenn eine Differenz eines Motorstroms zum Nennstrom einen bestimmten Wert überschreitet und/oder eine Differenz zwischen einem Nennstrom und einem Leerlaufstrom des entsprechenden Stellmotors entspricht. Die Überwachungsvorrichtung kann auch ausgebildet und angeordnet sein, die erfassten Motorströme mit einem jeweiligen Leerlaufstrom zu vergleichen und ein Warnsignal zu generieren, wenn einer oder mehrere der Motorströme im Wesentlichen mit dem jeweiligen Leerlaufstrom übereinstimmt oder nur geringfügig, insbesondere beispielsweise um 10%, vom Leerlaufstrom abweicht.

Diese Ausführungsformen haben den Vorteil, dass durch den Vergleich der aktuellen Motorströme mit relevanten Vergleichsgrößen auf den aktuellen Zustand der Stellmotoren bzw. der Stellantriebe insgesamt geschlossen werden kann und somit mögliche Schäden oder Ausfälle erkannt werden können.

Eine weitere bevorzugte Ausführungsform der Windnachführungsanordnung ist dadurch gekennzeichnet, dass die Überwachungsvorrichtung ausgebildet und angeordnet ist, die erfassten Motorströme miteinander zu vergleichen und ein Warnsignal zu generieren, wenn einer der Motorströme um mehr als 10 bis 30 Prozent, insbesondere um mehr als 25 Prozent, von einem der anderen Motorströme abweicht.

Es hat sich herausgestellt, dass diese Abweichungen besonders geeignet sind, um auf einen Schaden oder einen Ausfall eines Stellantriebs schließen zu können.

Eine weitere Ausführungsform der Windnachführungsanordnung ist dadurch gekennzeichnet, dass die Überwachungsvorrichtung derart mit der Steuerungsvorrichtung verbunden ist, dass die Überwachungsvorrichtung für jeden der zwei oder mehreren Stellmotoren den Motorstrom aufnehmen kann.

Es ist insbesondere bevorzugt, dass die Überwachungsvorrichtung an die Steuerungsvorrichtung angeschlossen ist und die einzelnen Motorströme über eine Anbindung an die Steuerungsvorrichtung aufnehmen kann.

Beispielsweise kann eine Verbindung pro Stellmotor zwischen der Überwachungsvorrichtung und der Steuerungsvorrichtung vorgesehen sein.

In einer möglichen Ausgestaltung wird in der Steuerungsvorrichtung selbst pro Stellmotor eine Reihenklemme gegen eine doppelstöckige Reihenklemme ausgetauscht, so dass die Möglichkeit besteht, einen Außenleiter durch einen Wandler der Überwachungsvorrichtung zu leiten und so den jeweiligen Motorstrom der Stellmotoren aufzunehmen. Die einzelnen Verbindungen können zur einfacheren Leitungsführung auch in einem gemeinsamen Kabel zwischen der Steuerungsvorrichtung und der Überwachungsvorrichtung zusammengeführt sein.

Es kann auch eine gemeinsame Verbindung der Stellmotoren zwischen der Überwachungsvorrichtung und der Steuerungsvorrichtung vorgesehen sein.

In einer weiteren Ausführungsform ist die Windnachführungsanordnung dadurch gekennzeichnet, dass die Überwachungsvorrichtung in einem Gehäuse angeordnet ist, das lösbar an einer Windenergieanlage, vorzugsweise an der Steuerungsvorrichtung, befestigbar ist.

Die Überwachungsvorrichtung wird vorzugsweise in einem separaten Gehäuse installiert und dieses Gehäuse wiederum, vorzugsweise lösbar, an einer Windenergieanlage angebracht. Insbesondere ist es bevorzugt, dass die Überwachungsvorrichtung in einem Gehäuse installiert und dieses Gehäuse an beispielsweise einer Seitenwand der Steuerungsvorrichtung lösbar befestigt wird. Eine lösbare Befestigung kann beispielsweise bevorzugt durch Magneten realisiert werden. Auf diese Weise ist es möglich, dass aufwandsarm und je nach Bauraumgegebenheiten unterschiedlicher Windenergieanlagentypen eine Überwachungsvorrichtung an existierenden Windenergieanlagen angebracht und so mit den übrigen Komponenten der Windenergieanlage verbunden werden kann.

Auf diese Weise können nicht nur neu zu erstellende Windenergieanlagen, sondern auch verschiedene, existierende und bereits in Betrieb befindliche Windenergieanlagen unterschiedlicher Typen nachgerüstet werden und so die erfindungsgemäßen Vorteile auch bei existierenden Anlagen erzielt werden.

Eine weitere bevorzugte Ausführungsform ist dadurch gekennzeichnet, dass die Steuerungsvorrichtung ausgebildet und angeordnet ist, ein Signal, vorzugsweise das zuvor beschriebene Warnsignal, von der Überwachungsvorrichtung zu empfangen.

Die Steuerungsvorrichtung empfängt vorzugsweise direkt oder indirekt, von der Überwachungsvorrichtung ein Signal, vorzugsweise das generierte Warnsignal. Dazu kann die Steuerungsvorrichtung mit der Überwachungsvorrichtung über eine Kabelverbindung verbunden sein, die Signalübertragung kann beispielsweise auch über (Mobil-)Funknetze oder andere Verbindungen erfolgen.

Eine weitere bevorzugte Ausführungsform ist dadurch gekennzeichnet, dass die Steuerungsvorrichtung ausgebildet und angeordnet ist, in Abhängigkeit des empfangenen Signals die Ansteuerung der Stellantriebe zu verändern.

Bei Ausfall eines oder mehrerer der Stellantriebe kann es bevorzugt sein, die Ansteuerung der übrigen Stellantriebe zu verändern, um eine Überlastung dieser Stellantriebe zu verhindern, zu reduzieren und/oder hinauszuzögern. Beispielsweise kann die Ansteuerung so verändert werden, dass bei kleinen Veränderungen der Windrichtung keine Windnachführung erfolgt, das heißt, die Stellantriebe nicht aktiv werden. Eine weitere beispielhafte Möglichkeit ist es, die Windnachführung durch Aktivierung der Stellantriebe erst dann vorzunehmen, wenn die geänderte Windrichtung über einen bestimmten Zeitraum konstant geblieben ist, um eine Windnachführung für nur kurzzeitige Windrichtungsschwankungen zu vermeiden.

Diese Maßnahmen können zwar zu geringfügigen Einbußen in der Leistung der Windenergieanlage führen, können jedoch größere Schäden bzw. Ausfälle der Windnachführungsanordnung und damit auch längere Stillstandszeiten der Windenergieanlage vermeiden helfen.

Gemäß eines weiteren Aspekts der Erfindung wird die oben genannte Aufgabe gelöst durch eine Überwachungsvorrichtung für eine Windnachführungsanordnung, vorzugsweise eine zuvor beschriebene Windnachführungsanordnung, die ausgebildet und angeordnet ist, für zwei oder mehreren Stellmotoren der Windnachführungsanordnung einen Motorstrom zu erfassen.

Die erfindungsgemäße Überwachungsvorrichtung dient insbesondere dafür, in existierenden oder neu zu errichtenden Windenergieanlagen eingebaut und so mit anderen Komponenten der Windenergieanlage verbunden zu werden, dass eine Windnachführungsanordnung, insbesondere eine Windnachführungsanordnung wie zuvor beschrieben, realisiert und auf diese Weise die erfindungsgemäßen Vorteile erzielt werden können.

In einer bevorzugten Ausführungsform ist die Überwachungsvorrichtung ausgebildet und angeordnet, die erfassten Motorströme zu vergleichen.

In einer weiteren bevorzugten Ausführungsform ist die Überwachungsvorrichtung ausgebildet und angeordnet, auf Basis eines Ergebnisses eines Vergleichs der Motorströme ein Warnsignal zu generieren.

In einer weiteren bevorzugten Ausführungsform ist die Überwachungsvorrichtung ausgebildet und angeordnet, ein Signal an eine Steuerungsvorrichtung, vorzugsweise eine Steuerungsvorrichtung zur Ansteuerung von Stellantrieben einer Windnachführungsanordnung, abzugeben, vorzugsweise das zuvor beschriebene Warnsignal.

In einer weiteren bevorzugten Ausführungsform ist die Überwachungsvorrichtung ausgebildet und angeordnet, ein Signal an eine Rechnereinheit einer Windenergieanlage abzugeben, vorzugsweise das zuvor beschriebene Warnsignal.

Gemäß der Erfindung ist die Überwachungsvorrichtung ausgebildet und angeordnet, die erfassten Motorströme miteinander zu vergleichen und ein Warnsignal zu generieren, wenn eine Differenz der Motorströme einen vorbestimmten Wert überschreitet.

In einer weiteren bevorzugten Ausführungsform ist die Überwachungsvorrichtung ausgebildet und angeordnet, die erfassten Motorströme miteinander zu vergleichen und ein Warnsignal zu generieren, wenn eine Differenz der Motorströme im Wesentlichen einer Differenz zwischen einem Nennstrom und einem Leerlaufstrom der Stellmotoren entspricht.

In einer weiteren bevorzugten Ausführungsform ist die Überwachungsvorrichtung ausgebildet und angeordnet, die erfassten Motorströme miteinander zu vergleichen und ein Warnsignal zu generieren, wenn einer der Motorströme um mehr als 10 bis 30 Prozent, insbesondere um mehr als 25 Prozent, von einem der anderen Motorströme abweicht.

In einer weiteren bevorzugten Ausführungsform ist die Überwachungsvorrichtung derart mit einer Steuerungsvorrichtung, vorzugsweise einer Steuerungsvorrichtung zur Ansteuerung von Stellantrieben einer Windnachführungsanordnung, verbunden, dass die Überwachungsvorrichtung den Motorstrom von zwei oder mehreren Stellmotoren aufnehmen kann.

Ferner ist es bevorzugt, dass die Überwachungsvorrichtung gekennzeichnet ist durch eine Verbindung pro Stellmotor zwischen der Überwachungsvorrichtung und einer Steuerungsvorrichtung, vorzugsweise einer Steuerungsvorrichtung zur Ansteuerung von Stellantrieben einer Windnachführungsanordnung.

In einer weiteren bevorzugten Ausführungsform ist die Überwachungsvorrichtung in einem Gehäuse angeordnet, das lösbar an einer Windenergieanlage, vorzugsweise an der Steuerungsvorrichtung, befestigbar ist.

Die erfindungsgemäße Überwachungsvorrichtung und ihre Fortbildungen weisen Merkmale auf, die sie insbesondere dafür geeignet machen, für eine erfindungsgemäße Windnachführungsanordnung und ihre Fortbildungen verwendet zu werden. Zu den Vorteilen, Ausführungsvarianten und Ausführungsdetails der Überwachungsvorrichtung und ihrer Fortbildungen wird auf die vorangegangene Beschreibung zu den entsprechenden Merkmalen der Windnachführungsanordnung und ihrer Fortbildungen verwiesen.

Gemäß eines weiteren Aspekts der Erfindung wird die oben genannte Aufgabe gelöst durch ein Verfahren zur Nachführung eines Rotors einer Windenergieanlage in Abhängigkeit von einer Windrichtung, umfassend die Schritte: Ansteuern von zwei oder mehreren Stellantrieben mit jeweils einem Stellmotor und einem Stellgetriebe mittels einer Steuerungsvorrichtung, vorzugsweise einer Steuerungsvorrichtung zur Ansteuerung von Stellantrieben einer Windnachführungsanordnung, Erfassen eines Motorstroms für jeden der zwei oder mehreren Stellmotoren mittels einer Überwachungsvorrichtung.

Gemäß einer bevorzugten Ausführungsform ist das Verfahren gekennzeichnet durch den Schritt Vergleichen der erfassten Motorströme.

Gemäß einer bevorzugten Ausführungsform ist das Verfahren gekennzeichnet durch den Schritt Generieren eines Warnsignals auf Basis eines Ergebnisses eines Vergleichs der Motorströme.

Gemäß einer bevorzugten Ausführungsform ist das Verfahren gekennzeichnet durch den Schritt Abgeben eines Signals an die Steuerungsvorrichtung, vorzugsweise des zuvor beschriebenen Warnsignals.

Gemäß einer bevorzugten Ausführungsform ist das Verfahren gekennzeichnet durch den Schritt Abgeben eines Signals an eine Rechnereinheit einer Windenergieanlage, vorzugsweise des zuvor beschriebenen Warnsignals.

Gemäß einer bevorzugten Ausführungsform ist das Verfahren gekennzeichnet durch den Schritt Vergleichen der erfassten Motorströme miteinander und Generieren eines Warnsignals, wenn eine Differenz der Motorströme einen vorbestimmten Wert überschreitet.

Gemäß einer bevorzugten Ausführungsform ist das Verfahren gekennzeichnet durch den Schritt Vergleichen der erfassten Motorströme miteinander und Generieren eines Warnsignals, wenn eine Differenz der Motorströme im Wesentlichen einer Differenz zwischen einem Nennstrom und einem Leerlaufstrom der Stellmotoren entspricht.

Gemäß einer bevorzugten Ausführungsform ist das Verfahren gekennzeichnet durch den Schritt Vergleichen der erfassten Motorströme miteinander und Generieren eines Warnsignals, wenn einer der Motorströme um mehr als 10 bis 30 Prozent, insbesondere um mehr als 25 Prozent, von einem der anderen Motorströme abweicht.

Gemäß einer bevorzugten Ausführungsform ist das Verfahren gekennzeichnet durch den Schritt Verbinden der Überwachungsvorrichtung derart mit der Steuerungsvorrichtung, dass die Überwachungsvorrichtung für jeden der zwei oder mehreren Stellmotoren den Motorstrom aufnehmen kann.

Gemäß einer bevorzugten Ausführungsform ist das Verfahren gekennzeichnet durch den Schritt Verbinden der Überwachungsvorrichtung mit der Steuerungsvorrichtung mittels einer Verbindung pro Stellmotor zwischen der Überwachungsvorrichtung und der Steuerungsvorrichtung.

Gemäß einer bevorzugten Ausführungsform ist das Verfahren gekennzeichnet durch den Schritt Anordnen der Überwachungsvorrichtung in einem Gehäuse, das lösbar an einer Windenergieanlage, vorzugsweise an der Steuerungsvorrichtung, befestigbar ist.

Gemäß einer bevorzugten Ausführungsform ist das Verfahren gekennzeichnet durch den Schritt Empfangen eines Signals, vorzugsweise des zuvor beschriebenen Warnsignals, von der Überwachungsvorrichtung durch die Steuerungsvorrichtung.

Gemäß einer bevorzugten Ausführungsform ist das Verfahren gekennzeichnet durch den Schritt Verändern der Ansteuerung der Stellantriebe in Abhängigkeit des empfangenen Signals.

Das erfindungsgemäße Verfahren und seine Fortbildungen weisen Merkmale bzw. Verfahrensschritte auf, die sie insbesondere dafür geeignet machen, für eine erfindungsgemäße Windnachführungsanordnung und/oder eine erfindungsgemäße Überwachungsvorrichtung sowie die jeweiligen Fortbildungen verwendet zu werden. Zu den Vorteilen, Ausführungsvarianten und Ausführungsdetails des erfindungsgemäßen Verfahrens und seiner Fortbildungen wird auf die zuvor beschriebenen, entsprechenden Aspekte der Windnachführungsanordnung bzw. der Überwachungsvorrichtung und ihrer jeweiligen Fortbildungen verwiesen.

Eine bevorzugte Ausführungsform der Erfindung wird beispielhaft anhand der beiliegenden Figur beschrieben. Es zeigt:

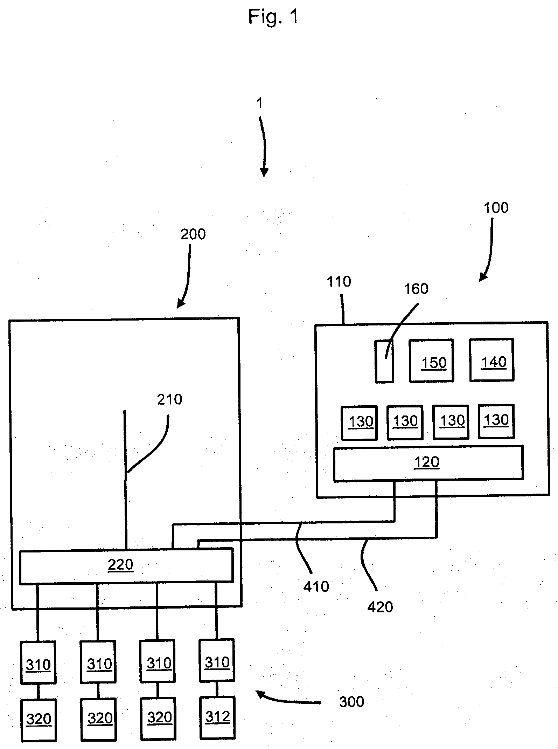

Fig. 1: Eine schematische Blockschaltanordnung einer bevorzugten Ausführungsform einer erfindungsgemäßen Windnachführungsanordnung.

Fig. 1 zeigt schematisch ein Blockschaltbild einer bevorzugten Ausführungsform einer erfindungsgemäßen Windnachführungsanordnung 1 zur Nachführung eines Rotors einer Windenergieanlage (nicht dargestellt) in Abhängigkeit von einer Windrichtung. Die Windnachführungsanordnung 1 umfasst vier Stellantriebe 300 mit jeweils einem Stellmotor 310 und einem Stellgetriebe 320.

Die Windnachführungsanordnung 1 umfasst ferner eine Steuerungsvorrichtung 200 zur Ansteuerung der Stellantriebe 300 über eine Steuerleitung 210 und eine Überwachungsvorrichtung 100, die mit der Steuerungsvorrichtung 200 über die Verbindungen 410, 420 verbunden ist. Die Verbindung 410 dient der Spannungsversorgung, die Verbindung 420 der Übertragung der Motorströme der einzelnen Stellmotoren 310, die von der Überwachungsvorrichtung 100 erfasst werden.

Dazu ist die Überwachungsvorrichtung 100 ausgebildet und angeordnet, für jeden der vier Stellmotoren 300 einen Motorstrom zu erfassen. Die Überwachungsvorrichtung 100 weist eine Klemmleiste 120, vier Wandler 130, ein GSM-Modul 140, eine Speicherprogrammierbare Steuerung (SPS)-Logik 150 und ein Netzteil 160 auf. Diese Komponenten sind in einem Gehäuse 110 angeordnet. Das Gehäuse 110 ist vorzugsweise lösbar an einer Windenergieanlage, insbesondere vorzugsweise an der Steuerungsvorrichtung 200, befestigbar.

Die Überwachungsvorrichtung 100 ist zudem ausgebildet und angeordnet, die erfassten Motorströme zu vergleichen. Die Überwachungsvorrichtung 100 kann ferner auf Basis eines Ergebnisses eines Vergleichs der Motorströme ein Warnsignal generieren. Dieses Warnsignal kann von der Überwachungsvorrichtung 100 an die Steuerungsvorrichtung 200 abgegeben werden, beispielsweise über eine nicht dargestellte weitere Verbindung zwischen der Überwachungsvorrichtung 100 und der Steuerungsvorrichtung 200. Die Steuerungsvorrichtung 200 wiederum ist vorzugsweise ausgebildet und angeordnet, das Warnsignal von der Überwachungsvorrichtung 100 zu empfangen, beispielsweise über eine nicht dargestellte weitere Verbindung zwischen der Überwachungsvorrichtung 100 und der Steuerungsvorrichtung 200.

Alternativ oder zusätzlich kann die Überwachungsvorrichtung 100 ausgebildet und angeordnet sein, das Warnsignal an eine Rechnereinheit einer Windenergieanlage abzugeben.

Das Warnsignal kann vorzugsweise auch über eine drahtlose Verbindung an die Steuerungsvorrichtung 200, eine Rechnereinheit einer Windenergieanlage und/oder andere Empfänger übertragen werden, beispielsweise über Mobilfunknetze mittels des GSMModuls 140.

Die Überwachungsvorrichtung 100 kann ferner ausgebildet und angeordnet sein, die erfassten Motorströme miteinander zu vergleichen und ein Warnsignal zu generieren, wenn eine Differenz der Motorströme einen vorbestimmten Wert überschreitet und/oder wenn eine Differenz der Motorströme im Wesentlichen einer Differenz zwischen einem Nennstrom und einem Leerlaufstrom der Stellmotoren 300 entspricht. Dabei ist es insbesondere bevorzugt, wenn ein Warnsignal generiert wird, wenn einer der Motorströme um mehr als 10 bis 30 Prozent, insbesondere um mehr als 25 Prozent, von einem der anderen Motorströme abweicht. Die genannten Differenzwerte können sowohl für einen Vergleich von Motorströmen untereinander als auch für einen Vergleich der Entwicklung eines Motorstroms in einem bestimmten Zeitraum verwendet werden.

Die Überwachungsvorrichtung 100 ist über die Verbindung 420 derart mit der Steuerungsvorrichtung 200 verbunden, dass die Überwachungsvorrichtung 100 für jeden der vier Stellmotoren 320 den Motorstrom aufnehmen kann. Innerhalb der Gesamtverbindung 420 ist vorzugsweise eine Verbindung pro Stellmotor 300 zwischen der Überwachungsvorrichtung 100 und der Steuerungsvorrichtung 200 vorgesehen. In der Klemmleiste 220 der Steuerungsvorrichtung 200 ist deshalb vorzugsweise pro Stellmotor 310 eine doppelstöckige Reihenklemme vorgesehen, so dass jeweils ein Außenleiter über die Klemmleiste 120 der Überwachungsvorrichtung 100 durch jeweils einen Wandler 130 der Überwachungsvorrichtung 100 geleitet werden kann, um den jeweiligen Motorstrom aufzunehmen.

Weitere Vorteile können erzielt werden, wenn die Steuerungsvorrichtung 200 ausgebildet und angeordnet ist, in Abhängigkeit des empfangenen Signals die Ansteuerung der Stellantriebe 300 zu verändern, insbesondere um bei Ausfall eines oder mehrerer der Stellantriebe 300 eine Überlastung der übrigen Stellantriebe 300 zu verhindern, zu reduzieren und/oder hinauszuzögern. Dazu kann beispielsweise bei kleinen Veränderungen der Windrichtung auf eine Windnachführung verzichtet werden, so dass die Stellantriebe 300 nicht aktiv werden. Beispielsweise kann eine Windnachführung auch nur bei über einen bestimmten Zeitraum im Wesentlichen konstanten Windrichtungsänderungen durchgeführt werden, um eine Windnachführung für nur kurzzeitige Windrichtungsschwankungen zu vermeiden.

Die Überwachungsvorrichtung 100 der erfindungsgemäßen Lösung ermöglicht durch die Erfassung der Motorströme der einzelnen Stellmotoren 310 eine Funktionskontrolle der Stellantriebe 300 und kann somit den Ausfall eines oder mehrerer der Stellantriebe 300 frühzeitig anzeigen. Die Motorströme bzw. ihre Veränderung lassen eine Aussage über eine Beschädigung, insbesondere beispielsweise einen Bruch an der Getriebewelle eines Stellgetriebes 320, zu. Indem die Überwachungsvorrichtung 100 die Motorströme erfasst und analysiert bzw. auswertet, insbesondere durch Vergleichen untereinander oder Vergleichen mit einem oder mehreren vorbestimmten Werten oder durch Vergleichen über einen Zeitraum, kann aus Abweichungen auf Fehlfunktion, Beschädigung oder Ausfall geschlossen werden, auch und gerade wenn Fehlfunktion, Beschädigung oder Ausfall bei einer konventionellen Wartung oder Inspektion noch nicht oder nur mit besonderem Aufwand erkennbar wären. Dies ist beispielsweise insbesondere beim Bruch einer Getriebewelle der Fall, wenn der Stellmotor 310 noch läuft und auch die Zahnräder des Stellgetriebes 320 durch den Eingriff der Ritzel noch mitdrehen, jedoch keine Kraftübertragung vom Stellmotor 310 auf das Stellgetriebe 320 aufgrund des Bruchs an der Getriebewelle mehr stattfindet und der Stellmotor 310 daher auch nur mit dem Leerlaufstrom und nicht mit dem Nennstrom läuft.

Auf diese Weise kann der beschädigte bzw. ausgefallene Stellantrieb 300 repariert oder ausgetauscht werden, bevor es durch den Ausfall oder die Beschädigung zu einer Überlastung der übrigen Stellantriebe 300 und damit zu weiteren Ausfällen bzw. Beschädigungen kommt. Der Austausch bzw. die Reparatur eines einzelnen Stellantriebs 300, beispielsweise durch Austausch einer gebrochenen Getriebewelle oder des Stellgetriebes 320, ist deutlich kostengünstiger und mit erheblich geringeren Ausfallzeiten der Windenergieanlage verbunden als der Austausch bzw. der Reparatur einer gesamten Windnachführungsanordnung 1.

## Patentansprüche

1. Windnachführungsanordnung (1) zur Nachführung eines Rotors einer Windenergieanlage in Abhängigkeit von einer Windrichtung, umfassend zwei oder mehrere Stellantriebe (300) mit jeweils einem Stellmotor (310) und einem Stellgetriebe (320), sowie eine Steuerungsvorrichtung (200) zur Ansteuerung der Stellantriebe (300),
ferner umfassend eine Überwachungsvorrichtung (100), die ausgebildet und angeordnet ist, für jeden der zwei oder mehreren Stellmotoren (300) einen Motorstrom zu erfassen,
**dadurch gekennzeichnet, dass** die Überwachungsvorrichtung (100) ausgebildet und angeordnet ist, die erfassten Motorströme miteinander zu vergleichen und ein Warnsignal zu generieren, wenn eine Differenz der Motorströme einen vorbestimmten Wert überschreitet.

2. Windnachführungsanordnung (1) nach einem der vorhergehenden Ansprüche,
**dadurch gekennzeichnet, dass** die Überwachungsvorrichtung (100) ausgebildet und angeordnet ist, ein Signal an die Steuerungsvorrichtung (200) abzugeben, vorzugsweise das Warnsignal nach dem vorhergehenden Anspruch.

3. Windnachführungsanordnung (1) nach einem der vorhergehenden Ansprüche,
**dadurch gekennzeichnet, dass** die Überwachungsvorrichtung (100) ausgebildet und angeordnet ist, ein Signal an eine Rechnereinheit einer Windenergieanlage abzugeben, vorzugsweise das Warnsignal nach Anspruch 1.

4. Windnachführungsanordnung (1) nach einem der vorhergehenden Ansprüche,
**dadurch gekennzeichnet, dass** die Überwachungsvorrichtung (100) ausgebildet und angeordnet ist, die erfassten Motorströme miteinander zu vergleichen und ein Warnsignal zu generieren, wenn eine Differenz der Motorströme im Wesentlichen einer Differenz zwischen einem Nennstrom und einem Leerlaufstrom der Stellmotoren (300) entspricht.

5. Windnachführungsanordnung (1) nach einem der vorhergehenden Ansprüche,
**dadurch gekennzeichnet, dass** die Überwachungsvorrichtung (100) ausgebildet und angeordnet ist, die erfassten Motorströme miteinander zu vergleichen und ein Warnsignal zu generieren, wenn einer der Motorströme um mehr als 10 bis 30 Prozent, insbesondere um mehr als 25 Prozent, von einem der anderen Motorströme abweicht.

6. Windnachführungsanordnung (1) nach einem der vorhergehenden Ansprüche,
**dadurch gekennzeichnet, dass** die Überwachungsvorrichtung (100) derart mit der Steuerungsvorrichtung (200) verbunden ist, dass die Überwachungsvorrichtung (100) für jeden der zwei oder mehreren Stellmotoren (320) den Motorstrom aufnehmen kann.

7. Windnachführungsanordnung (1) nach einem der vorhergehenden Ansprüche,
**gekennzeichnet durch** eine Verbindung pro Stellmotor (300) zwischen der Überwachungsvorrichtung (100) und der Steuerungsvorrichtung (200).

8. Windnachführungsanordnung (1) nach einem der vorhergehenden Ansprüche,
**dadurch gekennzeichnet, dass** die Überwachungsvorrichtung (100) in einem Gehäuse (110) angeordnet ist, das lösbar an einer Windenergieanlage, vorzugsweise an der Steuerungsvorrichtung (200), befestigbar ist.

9. Windnachführungsanordnung (1) nach einem der vorhergehenden Ansprüche,
**dadurch gekennzeichnet, dass** die Steuerungsvorrichtung (200) ausgebildet und angeordnet ist, ein Signal, vorzugsweise das Warnsignal nach Anspruch, von der Überwachungsvorrichtung (100) zu empfangen.

10. Windnachführungsanordnung (1) nach dem vorhergehenden Anspruch,
**dadurch gekennzeichnet, dass** die Steuerungsvorrichtung (200) ausgebildet und angeordnet ist, in Abhängigkeit des empfangenen Signals die Ansteuerung der Stellantriebe (300) zu verändern.

11. Überwachungsvorrichtung (100) für eine Windnachführungsanordnung, vorzugsweise eine Windnachführungsanordnung (1) nach einem der vorhergehenden Ansprüche, die ausgebildet und angeordnet ist, für zwei oder mehreren Stellmotoren (300) der Windnachführungsanordnung einen Motorstrom zu erfassen, die erfassten Motorströme miteinander zu vergleichen und ein Warnsignal zu generieren, wenn eine Differenz der Motorströme einen vorbestimmten Wert überschreitet.

12. Verfahren zur Nachführung eines Rotors einer Windenergieanlage in Abhängigkeit von einer Windrichtung,
umfassend die Schritte:
- Ansteuern von zwei oder mehreren Stellantrieben (300) mit jeweils einem Stellmotor (310) und einem Stellgetriebe (320) mittels einer Steuerungsvorrichtung (200), vorzugsweise einer Steuerungsvorrichtung zur Ansteuerung von Stellantrieben (300) einer Windnachführungsanordnung,
- Erfassen eines Motorstroms für jeden der zwei oder mehreren Stellmotoren (320) mittels einer Überwachungsvorrichtung (100),
- Vergleichen der erfassten Motorströme miteinander,
- Generieren eines Warnsignals, wenn eine Differenz der Motorströme einen vorbestimmten Wert überschreitet.

## Claims

1. Yawing arrangement (1) for controlling the yaw of a rotor of a wind turbine depending on a wind direction, comprising two or more actuators (300) each with an actuator motor (310) and an actuating gear (320), as well as a control device (200) for actuating the actuators (300),
further comprising a monitoring device (100) configured and disposed so as to detect a motor current for each of the two or more actuator motors (300),
**characterised in that** the monitoring device (100) is configured and disposed so as to compare the detected motor currents with one another and generate a warning signal if a difference between the motor currents exceeds a predefined value.

2. Yawing arrangement (1) as claimed in one of the preceding claims,
**characterised in that** the monitoring device (100) is configured and disposed so as to transmit a signal to the control device (200), preferably the warning signal as claimed in the preceding claim.

3. Yawing arrangement (1) as claimed in one of the preceding claims,
**characterised in that** the monitoring device (100) is configured and disposed so as to transmit a signal to a computer unit of a wind turbine, preferably the warning signal as claimed in claim 1.

4. Yawing arrangement (1) as claimed in one of the preceding claims,
**characterised in that** the monitoring device (100) is configured and disposed so as to compare the detected motor currents with one another and generate a warning signal if a difference between the motor currents essentially corresponds to a difference between a nominal current and a no-load current of the actuator motors (300).

5. Yawing arrangement (1) as claimed in one of the preceding claims,
**characterised in that** the monitoring device (100) is configured and disposed so as to compare the detected motor currents with one another and generate a warning signal if one of the motor currents deviates from one of the other motor currents by more than 10 to 30 percent, in particular by more than 25 percent.

6. Yawing arrangement (1) as claimed in one of the preceding claims,
**characterised in that** the monitoring device (100) is connected to the control device (200) in such a way that the monitoring device (100) is able to receive the motor current for each of the two or more actuator motors (320).

7. Yawing arrangement (1) as claimed in one of the preceding claims,
**characterised by** a connection for each actuator motor (300) between the monitoring device (100) and the control device (200).

8. Yawing arrangement (1) as claimed in one of the preceding claims,
**characterised in that** the monitoring device (100) is disposed in a housing (110) which can be releasably secured to a wind turbine, preferably to the control device (200).

9. Yawing arrangement (1) as claimed in one of the preceding claims,
**characterised in that** the control device (200) is configured and disposed so as to receive a signal from the monitoring device (100), preferably the warning signal as claimed in claim 1.

10. Yawing arrangement (1) as claimed in the preceding claim, **characterised in that** the control device (200) is configured and disposed so as to vary actuation of the actuators (300) depending on the received signal.

11. Monitoring device (100) for a yawing arrangement, preferably a yawing arrangement (1) as claimed in one of the preceding claims, which is configured and disposed so as to detect a motor current for two or more actuator motors (300) of the yawing arrangement, compare the detected motor currents with one another and generate a warning signal if a difference between the motor currents exceeds a predefined value.

12. Method of controlling the yaw of a rotor of a wind turbine depending on a wind direction,
comprising the steps:
- activating two or more actuators (300) each having an actuator motor (310) and an actuating gear (320) by means of a control device (200), preferably a control device for actuating actuators (300) of a yawing arrangement,
- detecting a motor current for each of the two or more actuator motors (320) by means of a monitoring device (100),
- comparing the detected motor currents with one another,
- generating a warning signal if a difference between the motor currents exceeds a predefined value.

## Revendications

1. Agencement d'orientation d'éolienne (1) pour l'orientation d'un rotor d'une éolienne en fonction d'un sens du vent, comprenant deux ou plusieurs mécanismes de réglage (300) avec respectivement un moteur de réglage (310) et un engrenage de réglage (320), ainsi qu'un dispositif de commande (200) pour la commande des mécanismes de réglage (300),
comprenant de plus un dispositif de surveillance (100) qui est réalisé et agencé afin de détecter un courant de moteur pour chacun des deux ou plusieurs moteurs de réglage (300),
**caractérisé en ce que** le dispositif de surveillance (100) est réalisé et agencé afin de comparer les courants de moteur détectés les uns aux autres et de générer un signal d'avertissement lorsqu'une différence des courants de moteur dépasse une valeur prédéterminée.

2. Agencement d'orientation d'éolienne (1) selon l'une quelconque des revendications précédentes,
**caractérisé en ce que** le dispositif de surveillance (100) est réalisé et agencé afin de transmettre un signal au dispositif de commande (200), de préférence le signal d'avertissement selon la revendication précédente.

3. Agencement d'orientation d'éolienne (1) selon l'une quelconque des revendications précédentes,
**caractérisé en ce que** le dispositif de surveillance (100) est réalisé et agencé afin de transmettre un signal à une unité de calcul d'une éolienne, de préférence le signal d'avertissement selon la revendication 1.

4. Agencement d'orientation d'éolienne (1) selon l'une quelconque des revendications précédentes,
**caractérisé en ce que** le dispositif de surveillance (100) est réalisé et agencé afin de comparer les courants de moteur détectés les uns avec les autres et de générer un signal d'avertissement lorsqu'une différence des courants de moteur correspond sensiblement à une différence entre un courant nominal et un courant à vide des moteurs de réglage (300).

5. Agencement d'orientation d'éolienne (1) selon l'une quelconque des revendications précédentes,
**caractérisé en ce que** le dispositif de surveillance (100) est réalisé et agencé afin de comparer les courants de moteur détectés les uns aux autres et de générer un signal d'avertissement lorsque l'un des courants de moteur diverge de plus de 10 à 30 pour cent, en particulier de plus de 25 pour cent, de l'un des autres courants de moteur.

6. Agencement d'orientation d'éolienne (1) selon l'une quelconque des revendications précédentes,
**caractérisé en ce que** le dispositif de surveillance (100) est relié au dispositif de commande (200) de telle manière que le dispositif de surveillance (100) puisse recevoir le courant de moteur pour chacun des deux ou plusieurs moteurs de réglage (320).

7. Agencement d'orientation d'éolienne (1) selon l'une quelconque des revendications précédentes,
**caractérisé par** une liaison par moteur de réglage (300) entre le dispositif de surveillance (100) et le dispositif de commande (200).

8. Agencement d'orientation d'éolienne (1) selon l'une quelconque des revendications précédentes,
**caractérisé en ce que** le dispositif de surveillance (100) est agencé dans un boîtier (110) qui peut être fixé de manière détachable sur une éolienne, de préférence sur le dispositif de commande (200).

9. Agencement d'orientation d'éolienne (1) selon l'une quelconque des revendications précédentes,
**caractérisé en ce que** le dispositif de commande (200) est réalisé et agencé afin de recevoir un signal, de préférence le signal d'avertissement selon la revendication 1 du dispositif de surveillance (100).

10. Agencement d'orientation d'éolienne (1) selon l'une quelconque des revendications précédentes,
**caractérisé en ce que** le dispositif de commande (200) est réalisé et agencé afin de modifier la commande des mécanismes de réglage (300) en fonction du signal reçu.

11. Dispositif de surveillance (100) pour un agencement d'orientation d'éolienne, de préférence un agencement d'orientation d'éolienne (1) selon l'une quelconque des revendications précédentes, qui est réalisé et agencé afin de détecter pour deux ou plusieurs moteurs de réglage (300) de l'agencement d'orientation d'éolienne un courant de moteur, de comparer les courants de moteur détectés les uns aux autres et de générer un signal d'avertissement lorsqu'une différence des courants de moteur dépasse une valeur prédéterminée.

12. Procédé d'orientation d'un rotor d'une éolienne en fonction d'un sens du vent, comprenant les étapes suivantes :
- la commande de deux ou plusieurs mécanismes de réglage (300) avec respectivement un moteur de réglage (310) et un engrenage de réglage (320) à l'aide d'un dispositif de commande (200), de préférence un dispositif de commande pour la commande de mécanismes de réglage (300) d'un agencement d'orientation d'éolienne,
- la détection d'un courant de moteur pour chacun des deux ou plusieurs moteurs de réglage (320) à l'aide d'un dispositif de surveillance (100),
- la comparaison des courants de moteur détectés les uns aux autres,
- la génération d'un signal d'avertissement lorsqu'une différence des courants de moteur dépasse une valeur prédéterminée.
